# EUROPEAN PATENT SPECIFICATION

(11) **EP 0 439 216 B1**
(45) Date of publication and mention of the grant of the patent: **08.06.1994**
(21) Application number: 91200052.8
(22) Date of filing: 14.01.1991
(51) Int. Cl.: A01C 23/04

(54) **A device for spreading liquid manure over the ground**
Vorrichtung zum Verteilen von Gülle über dem Boden
Dispositif pour épandre du lisier sur le sol

(30) Priority: 15.01.1990 NL 9000091
(43) Date of publication of application: 31.07.1991
(73) Proprietor: BUTS MEULEPAS B.V., NL-5342 PV Oss (NL)
(72) Inventor: Meulepas, Wilhelmus Theodorus Anthonius, NL-5453 JX Langenboom (NL)
(74) Representative: Van kan, Johan Joseph Hubert, Ir.

(56) References cited:
- EP-A- 0 056 329
- EP-A- 0 221 197
- NL-A- 8 501 348
- US-A- 3 618 538

## Description

The invention relates to a method for spreading liquid manure over the ground by means of a device having a tank, said manure being supplied under pressure from said tank to a plurality of discharge pipes located side by side, when seen in the intended direction of movement.

When spreading liquid manure, it is desirable for the liquid manure to be brought into the ground as directly as possible in order to prevent the emission of harmfull constituents, such as ammonia, as much as possible. In this regard the use of devices provided with coulters, cutting discs or cutting knives have been proposed, by means of which grooves are cut into the ground, in such a manner that the discharge end of the pipe can be positioned under the ground surface, so that the liquid manure can be injected under the ground surface under pressure (see EP-A-0,221,197; U.S.A. 3,618,538; NL-A-8501348; EP-A-056329). Particularly when manuring meadows a method such as the ones mentioned above is generally not acceptable, since such a method will cause undesirable damage to the sward.

The object of the invention is to obtain a method of the above kind, by means of which an effective spreading of liquid manure can be realised on grassland or the like.

According to the invention this can be achieved in that the ends of the discharge pipes are dragged over the ground behind plate-shaped free floating coulters, which are dragged over the ground surface with their horizontal bottom ends.

Such plate-shaped coultes can readily be moved over grassland, and separate the grass or any other vegetation thereby, whilst the liquid manure will flow out onto the ground surface directly behind the coulter. In practise it has become apparent that an effective spreading of the liquid manure can be acheived thereby, whilst the emission of ammonia vapours or the like is largely prevented.

For performing the method according the invention there can be used a device provided with a tank and with a plurality of discharge pipes, whereby said pipes are located side by side, when seen in the intended direction of movement of the device during operation, and are connected to the tank by means of lines, in such a manner that liquid manure can be supplied from the tank, via the lines to the discharge pipes. Thereby according the invention the lower ends of the discharge pipes are located behind the rear ends of coulters, which are formed by upright plate-shaped bodies whose lower edges extend substantially horizontally and are formed by front parts for resting on the ground during operation which are located lower than remaining parts of the lower edges and whose upper edges slope upwards to the rear whilst the coulters and the pipes are vertically movebly coupled to the frame by means of parallelogram-shaped mechanisms.

The invention will be explained in more detail hereafter, with reference to a possible embodiment of the construction according to the invention diagrammatically illustrated in the accompanying fiugres.

Figure 1 is a diagrammatically side elevational view of a device according to the invention.

Figure 2 is a rear view of the device illustrated in figure 1.

Figure 3 is a larger-scale side elevational view of a coulter with discharge pipes secured thereto.

Figure 4 is an elevational view of figure 3, along the arrow IV in figure 3.

Figure 5 is an elevational view of figure 3, along the arrow V in figure 3.

Figure 6 shows a further embodiment of a coulter for a device according to the invention.

Figure 7 is a side elevational view of figure 6.

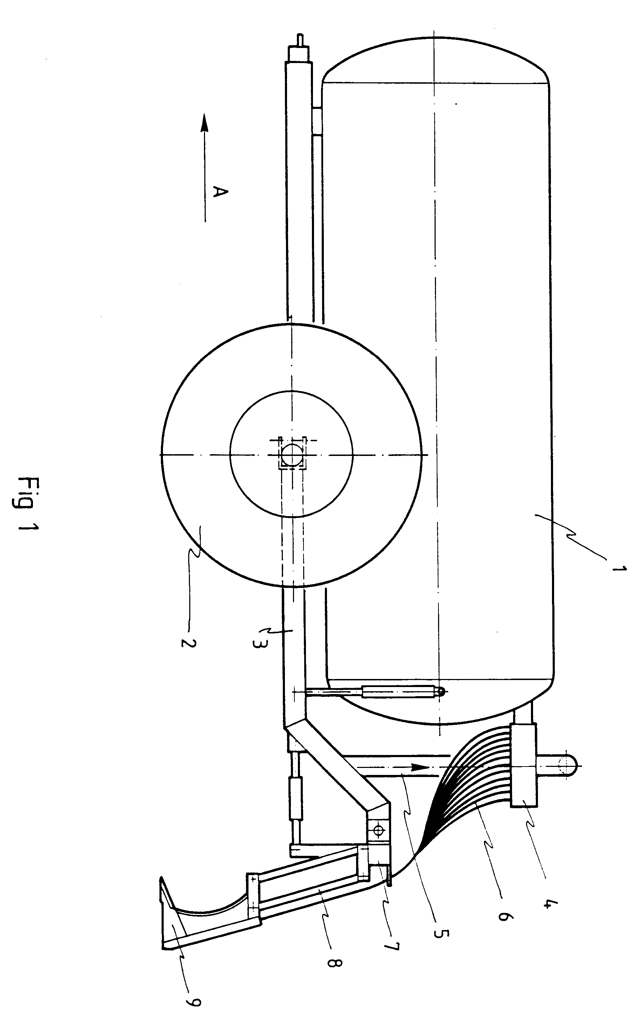

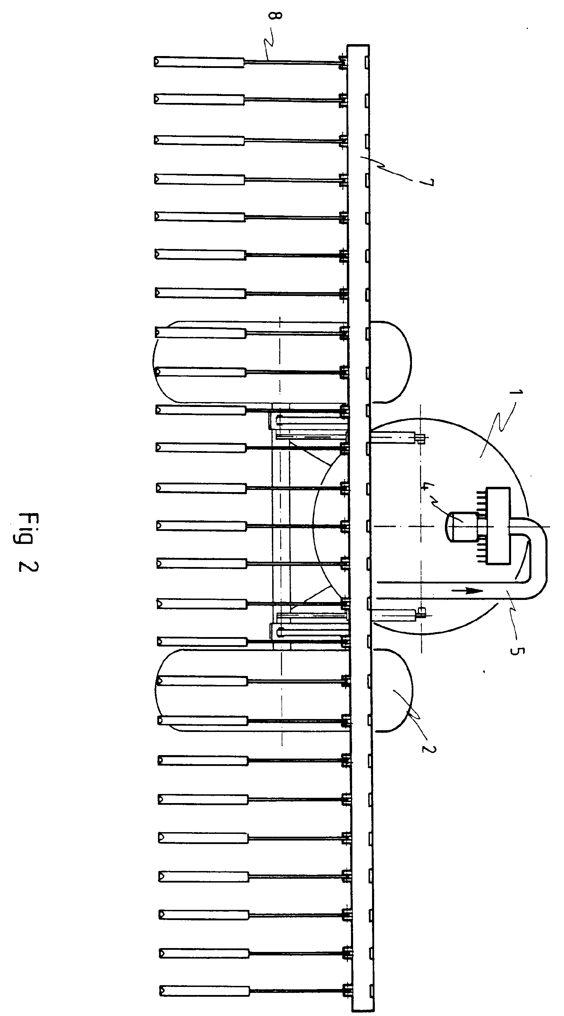

The device illustrated in figures 1-2 comprises a tank 1, which is mounted on a frame 3 supported by ground wheels 2. A pump 4 is mounted on the frame 3, said pump being connected to the interior of the tank by means of a suction pipe 5. Furthermore a number of discharge lines 6 are connected to the pump 4.

Furthermore a frame beam 7, which extends transversely to the intended direction of movement according to arrow A, is secured to the frame 3. To said frame beam coulters 9 are vertically movably coupled to the frame by means of parallellogram-shaped mechanisms 8.

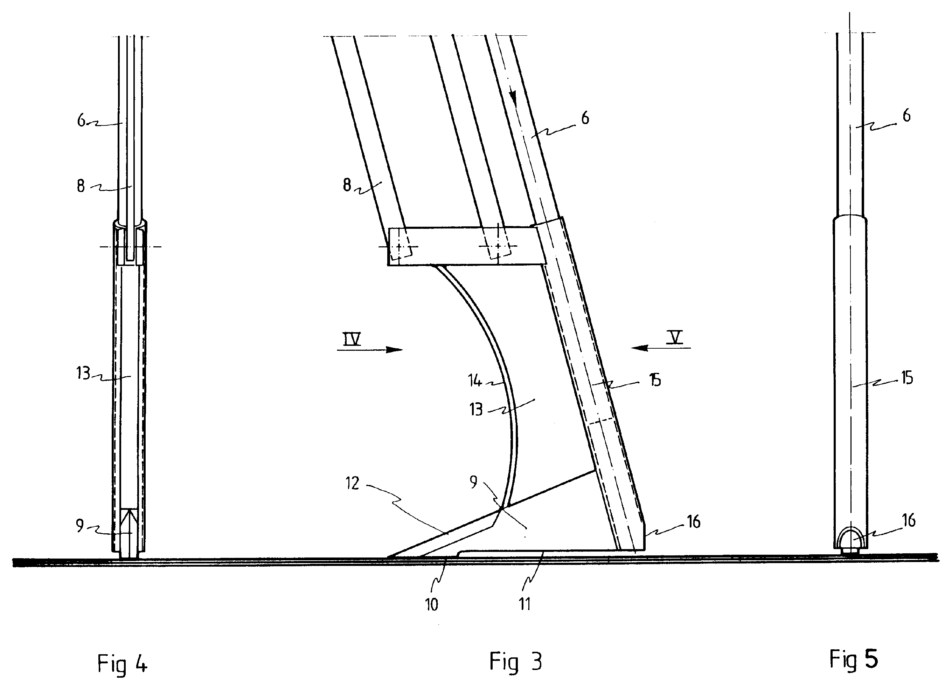

As is shown in more detail in Figures 3 - 5, each coulter 9 is at least substantially formed of a triangular vertical plate, which extends in the direction of movement of the device. The thickness of the plate, or the width of the plate, when measured perpendicularly to the direction of movement, preferably is 20 - 25 mm.

As furthermore appears from Figure 3, the lower edge of the coulter 9 is formed of two horizontally extending parts 10 and 11, whereby the shorter part, having a length of ± 100 mm, rests on the ground during operation, whilst the part 11, being located ± 7 mm higher and having a length of ± 220 mm, is spaced by some distance from the ground surface.

The upper boundary edge 12 of the coulter 9 slopes upwards from the foremost point of the coulter towards the rear, as will be apparent from Figure 3.

A further vertical plate-shaped part 13 joins up with the rear part of the upper edge 12 of the coulter, said part 13 coupling the coulter 9 to the parallellogram-shaped mechanism 8. As is illustrated in Figure 3, the front edge 14 of said plate-shaped part is thereby curved, in such a manner that the centre of curvature of said part is located in front of the edge 14 in question, when seen in the direction of movement.

A discharge pipe 15 secured to the plate-shaped parts 9 and 13 extends along the rear edge of said plate-shaped parts 9 and 13. Said pipe 15 thereby slopes upwards from its lower end towards the front, when seen in the direction of movement, at an angle of ± 75°. A recess 16 is provided in the rear side of the pipe, near the open bottom end of the pipe.

To each of the discharge pipes 15 there is connected the end of one of the hoses 6.

During operation the device may e.g. be attached to a tractor or the like, and be moved in the direction according to the arrow A. The coulters 9 thereby rest with the front parts 10 of their lower edges on the ground, e.g. a sward or the like. The liquid is sucked in from the tank 1 and distributed over the lines 6 by means of the pump 4. Via said lines 6 the manure to be spread will flow into the discharge pipes 15. The liquid manure supplied flows from the bottom ends of the discharge pipes onto the ground. Said outflow is facilitated by the inclined arrangement of the discharge pipes 15, as well as by the opening 16 provided near the lower end of each discharge pipe.

The coulters 9, which are each equipped with a pointed tip and an upwardly sloping upper side 12, separate the grass on the ground or any other vegetation, thus protecting the discharge pipe 15 from being damaged. Said pushing aside of the vegetation by means of the coulter also facilitates the outflow of the liquid from the discharge pipes 15.

The plate 13 with its curved front edge 14 prevents loose crop or the like present on the ground from heaping up in front of the discharge pipe 15.

As a result of their parallellogram-shaped suspension 8 the various coulters with the discharge pipes secured thereto can adjust to unevennesses in the ground.

In practice it has appeared that by using this construction an effective outflow of the liquid manure can be effected, whereby the manure easily spreads over the ground and penetrates the soil.

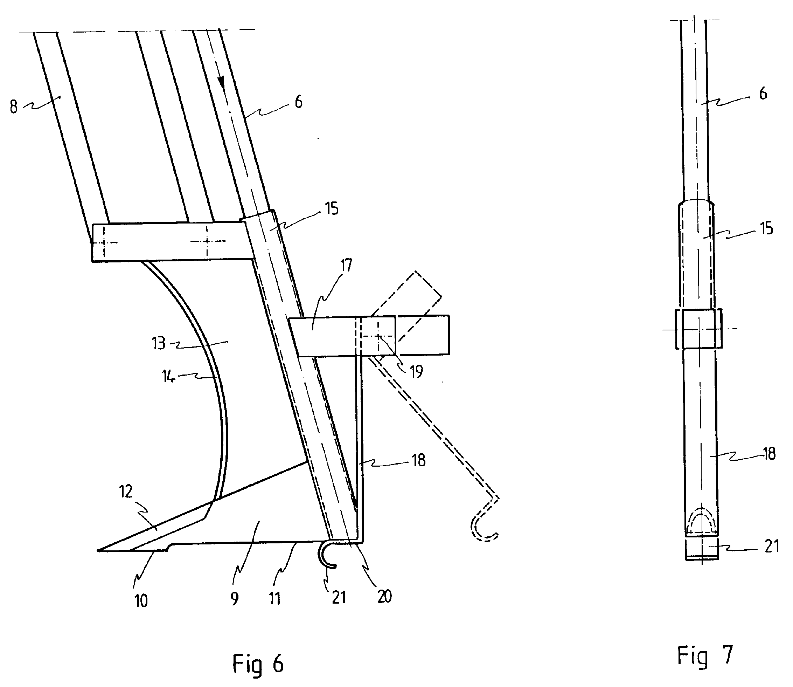

The embodiment illustrated in Figures 6 and 7 at least substantially corresponds with the above-described embodiment, consequently corresponding parts have been numbered alike in the various Figures.

With the embodiment illustrated in Figures 6 and 7 rearwardly extending supports 17 are secured to the discharge pipe 5. Between said supports there is pivotally coupled, about a pivot pin 19 extending horizontally and transversely to the intended direction of movement, the upper end of an arm 18

A closing part 20, extending perpendicularly to the arm 18 and having a downwardly curved end 21, joins up with the bottom end of said arm. The arm 18 with the closing part 20 forms a closing means which, in the position of the closing means illustrated by full lines in Figure 6, closes the bottom end of the discharge pipe in order to prevent leakage from the discharge pipe during transport or the like. When the device is set into operation the bent bottom ends 21 will come into contact with the ground, and cause the closing means to pivot into the position illustrated by dotted lines in Figure 6.

## Claims

1. A method for spreading liquid manure over the ground by means of a device having a tank (1), said manure being supplied under pressure from said tank (1) to a plurality of discharge pipes (15) located side by side, when seen in the intended direction of movement (A), characterised in that the ends of the discharge pipes (15) are dragged over the ground behind the plate-shaped free floating coulters (9), which are dragged over the ground surface with their horizontal bottom ends.

2. A device for performing the method according claim 1, said device being provided with a tank (1) and with a plurality of discharge pipes (15), said pipes being located side by side, when seen in the intended direction of movement (A) of the device during operation, and being connected to the tank (1) by means of lines (6), in such a manner that liquid manure can be supplied from the tank (1), via the lines (6) to the discharge pipes (15), whereby the lower ends of the discharge pipes are located behind the rear ends of coulters (9), which are formed by upright plate-shaped bodies whose lower edges (10, 11) extend substantially horizontally and are formed by front parts (10) for resting on the ground during operation which are located lower than remaining parts of the lower edges (11) and whose upper edges (12) slope upwards to the rear and that the coulters (9) and the pipes (15) are vertically movably coupled to the frame by means of parallelogram-shaped mechanisms (8).

3. A device according to claim 2, characterised in that the thickness of a plate-shaped coulter (9) is ± 20 - 25 mm.

4. A device according to claim 2 or 3, characterised in that a discharge pipe (15) slopes upwards towards the front at an angle of ± 75°.

5. A device according to any one of the preceding claims 2-4, characterised in that a closing means (20) is provided, by means of which the bottom end of a discharge pipe (15) can be closed.

6. A device according to claim 5, characterised in that the closing means (20) is secured to the bottom end of an arm (18), which is pivotally coupled to the frame of the device.

7. A device according to claim 6, characterised in that the closing means (20) is provided with a part extending under the closing means, said part causing the closing means (20) to pivot rearwards when contact is made with the ground.

8. A device according to any one of the preceding claims 2-7, characterised in that near the open bottom end of a discharge pipe (15) a part (16) of the rear side of the pipe has been removed.

## Revendications

1. Procédé destiné à épandre du lisier sur le sol au moyen d'un dispositif comportant une cuve (1), ce lisier étant amené sous pression à partir de la cuve (1) à plusieurs conduites de décharge (15) situées côte à côte, vues dans la direction souhaitée du mouvement (A), caractérisé en ce que les extrémités des conduites de décharge (15) sont tractées sur le sol derrière les coutres (9) flottant librement en forme de plaque qui sont traînés sur la surface du sol avec leurs extrémités de fond horizontales.

2. Dispositif pour réaliser le procédé selon la revendication 1, ce dispositif étant muni d'une cuve et de plusieurs conduites de décharge (15), ces conduites étant situées côte à côte, vues dans la direction souhaitée du mouvement (A) du dispositif pendant le fonctionnement, et étant raccordées à la cuve (1) en moyen de canalisations (6) de telle manière que le lisier peut être fourni par la cuve (1), par l'intermédiaire d'une canalisations (6) vers les conduites de décharge (15), les extrémités inférieures des conduites de décharge étant ainsi situées derrière les extrémités arrière des coutres (9) qui sont constitués par des corps verticaux en forme de plaques dont les bords inférieurs (10,11) s'étendent sensiblement horizontalement et sont formés par des parties frontales (10) pour reposer sur le sol pendant le fonctionnement et qui sont situés à un niveau inférieur aux parties restantes du bord inférieur (11) et dont les bords supérieurs (12) s'inclinent vers le haut en direction de l'arrière et en ce que les coutres (9) et les conduites (15) sont raccordés verticalement d'une façon mobile sur le châssis au moyen de mécanismes en forme de parallélogramme (8).

3. Dispositif selon la revendication 2, caractérisé en ce que l'épaisseur du coutre en forme de plaque (9) est de ± 20 - 25 mm.

4. Dispositif selon la revendication 2 ou 3, caractérisé en ce qu'une conduite de décharge (15) s'incline vers le haut en direction de l'avant selon un angle de ± 75°.

5. Dispositif selon l'une quelconque des revendications précédentes 2-4, caractérisé en ce qu'il est prévu un moyen de fermeture (20) au moyen duquel on peut obturer l'extrémité inférieure d'une conduite de décharge (15).

6. Dispositif selon la revendication 5, caractérisé en ce que le moyen de fermeture (20) est fixé sur l'extrémité inférieure d'un bras (18) qui est raccordé de façon pivotante au châssis du dispositif.

7. Dispositif selon la revendication 6, caractérisé en ce que le moyen de fermeture (20) est muni d'une partie s'étendant sous les moyens de fermeture, cette partie faisant pivoter les moyens de fermeture (20) vers l'arrière lorsque le contact est établi avec le sol.

8. Dispositif selon l'unè quelconque des revendications précédentes 2-7, caractérisé en ce qu'à proximité de l'extrémité inférieure ouverte d'une conduite de décharge (15) une partie (16) du côté arrière de la conduite a été enlevée.

## Patentansprüche

1. Verfahren zum Verteilen von flüssiger Gülle über den Boden mittels einer einen Tank (1) aufweisenden Vorrichtung, wobei die Gülle unter Druck von dem Tank (1) einer Mehrzahl von, in der vorgesehenen Bewegungsrichtung (A) gesehen, nebeneinander angeordneten Auslaßrohren (15) zugeführt wird, dadurch gekennzeichnet, daß die Enden der Auslaßrohre (15) über den Boden hinter plattenförmigen, freigängigen Pflugmessern (9) gezogen werden, wobei letztere mit ihren horizontalen unteren Enden über die Bodenoberfläche gezogen werden.

2. Vorrichtung zur Durchführung des Verfahrens nach Anspruch 1, wobei die Vorrichtung einen Tank (1) und eine Mehrzahl von, in der im Betrieb der Vorrichtung vorgesehenen Bewegungsrichtung (A) gesehen, nebeneinander angeordnete Auslaßrohre (15) aufweist, die mit dem Tank (1) mittels Leitungen (6) derart verbunden sind, daß die flüssige Gülle von dem Tank (1) über die Leitungen (6) den Auslaßrohren (15) zugeführt werden kann, wobei die unteren Enden der Auslaßrohre hinter den rückwärtigen Enden der Pflugmesser (9) angeordnet sind, die durch senkrechte, plattenförmige Körper gebildet sind, deren untere Kanten (10, 11) sich im wesetlichen horizontal erstrecken und vordere Abschnitte (10) aufweisen, die während des Betriebs auf dem Boden aufliegen und niedriger angeordnet sind, als die restlichen Abschnitte der unteren Kanten (11), und deren obere Kanten (12) nach hinten ansteigen, wobei die Pflugmesser (9) und die Rohre (15) vertikal bewegbar mittels eines parallelogrammförmigen Mechanismus (8) mit dem Rahmen gekoppelt sind.

3. Vorrichtung nach Anspruch 2, dadurch gekennzeichnet, daß die plattenförmigen Pflugmesser (9) eine Dicke von ±20 bis 25 mm aufweisen.

4. Vorrichtung nach Anspruch 2 oder 3, dadurch gekennzeichnet, daß ein Auslaßrohr (15) mit einem Winkel von ± 75° nach vorne ansteigt.

5. Vorrichtung nach einem der vorhergehenden Ansprüche 2 bis 4, dadurch gekennzeichnet, daß ein Verschlußmittel (20) vorgesehen ist, durch welches das untere Ende eines Auslaßrohres (15) verschließbar ist.

6. Vorrichtung nach Anspruch 5, dadurch gekennzeichnet, daß das Verschlußmittel (20) am unteren Ende eines mit dem Rahmen der Vorrichtung schwenkbar verbundenen Arms (18) befestigt ist.

7. Vorrichtung nach Anspruch 6, dadurch gekennzeichent daß das Verschlußmittel (20) mit einem Teil ausgebildet ist, welches sich unterhalb des Verschlußmittels erstreckt und bewirkt, daß das Verschlußmittel (20) bei Kontakt mit dem Boden nach hinten schwenkt.

8. Vorrichtung nach einem der vorhergehenden Ansprüche 2 bis 7, dadurch gekennzeichnet, daß benachbart zum offenen unteren Ende eines Auslaßrohres (15) ein Teil (16) der Rückseite des Rohres entfernt ist.
